# EUROPEAN PATENT APPLICATION

(11) **EP 2 326 086 A1**
(43) Date of publication of application: **25.05.2011**
(21) Application number: 09306134.9
(22) Date of filing: 24.11.2009
(51) Int. Cl.: H04N 7/14, H04N 7/173, H04N 7/24, G06Q 10/00, G06Q 50/00, H04L 12/18

(54) **Method and system for interactive communications between an end-user terminal and a remote server or terminal**

(71) Applicant: Mahfoda, Arié, 75116 Paris (FR)
(72) Inventor: Mahfoda, Arié, 75116 Paris (FR)
(74) Representative: Callon de Lamarck, Jean-Robert

(57) **Abstract**

The invention concerns a method for interactive communications between an end-user terminal (2) and a remote server or terminal (4) comprising the steps of :
- connecting (E1) said end-user terminal (2) to a service platform (3) through a communication network;
- transmitting (E3) by said service platform an interactive digital content (6) to the end-user terminal (2) through said communication network;
- opening (E4) said interactive digital content (6) on said end-user terminal (2), at least an interactive area (62) comprised in the interactive digital content (6) and selectable by the end user through action on an interface means of the end-user terminal (2) being displayed after said interactive digital content (6) is opened;

wherein said method further comprises:
- upon selection of a determined interactive area (62) by the end user, establishing (E5) by said service platform (3) a real-time voice and/or video communication (8) via the communication network, between the end-user terminal (2) and said remote server or terminal (4).

## Description

### Field of the invention

The invention relates to interactive communication between an end-user terminal and a remote server or terminal. More in particular, the invention relates to method for providing an interactive video communication between an end user and a remote server or terminal.

### Background of the invention

It is already known, with Web 2.0 technologies, to provide end users with access to interactive services.

In particular, downloadable video contents with interactive areas are already known.

In these video contents, selectable interactive areas are displayed when video is displayed. These video contents can be found in video hosting services onto which an end user can upload a video content through an end-user terminal. The video content is stored in a video data base and is assigned a network address.

Web 2.0 does however not permit to achieve satisfactory response times between an action of the end user to select an interactive zone on the video and the loading corresponding to this selection on the end user terminal.

The interactivity quality is therefore considered as unsatisfactory.

Interactive areas usually redirect to other downloadable video contents or to another network page when selected by the end user through the end-user terminal. Therefore, interactivity is poor and the end user can only be redirected to another website or can only correspond via e-mail.

### Invention presentation

The invention aims to overcome one or more drawbacks of the prior art by providing a method for interactive communication according to claim 1.

Other optional features of the method are found in dependent claims 2 to 9.

The invention also provides a method for easily generating an interactive digital content to be used in the method for interactive communications according to claim 10 or 11.

The invention also provides a system for interactive communications between an end-user terminal and a remote server or terminal according to claim 12.

Other optional features of the method are found in dependent claims 12 to 16.

One advantage of the invention is that interactivity is enhanced. The end user has more options for interacting with a digital content. Also, when dealing with a service provided by a remote server or terminal, the end user can be provided all kinds of information that can be made clearer by the use of visual and/or voice information, or that does not need to be memorised since they can be displayed.

Another advantage of the invention is that it provides service providers with a digital content that can be used as an incentive lead to incite the end user to use/consume services unknown, which the end user did not intend to use/consume before being incited by the lead. Thus, services can be highly monetised.

Another advantage is that service supply can be modified easily by easy edition of digital content and interactive area.

Still another advantage is that it is easy for service providers to create or edit an interactive digital content and to customise it as they wish.

### Drawing presentation

Other features, aims and advantages of the invention will become apparent through reading of the detailed description below with reference to the illustrative and non limiting drawings, wherein:
- figure 1 is a schematic view of a system for interactive communications according to an embodiment of the invention;
- figure 2 is a schematic diagram showing a method for interactive communications according to an implementation of the invention;
- figure 3 illustrates a method for creating and editing an interactive digital content used in the method of figure 2 and a digital file obtained through this method;
- figure 4 illustrates assembling of elements constituting an interactive digital content from a digital file obtained through the method of figure 3;
- figures 5 and 6 illustrate the system of figure 1 with more than one end-user terminal, figure 5 showing targeting of an end-user terminal and figure 6 showing data exchange between two end-user terminals.

### Detailed description of the invention

### The system for interactive communications

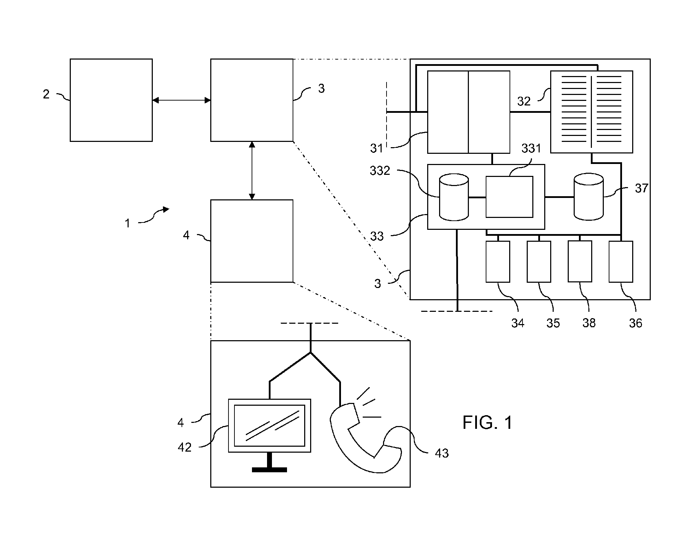

In reference to figure 1, a system **1** for interactive communications according to one embodiment of the invention is described hereafter.

The system **1** comprises:
- an end-user terminal **2;**
- a service platform **3;** and
- a remote server or terminal **4.**

The end-user terminal **2** and the remote server or terminal **4** are connectable to the service platform **3** through a communication network.

The communication network can be a TCP/IP network, although other networks can be contemplated.

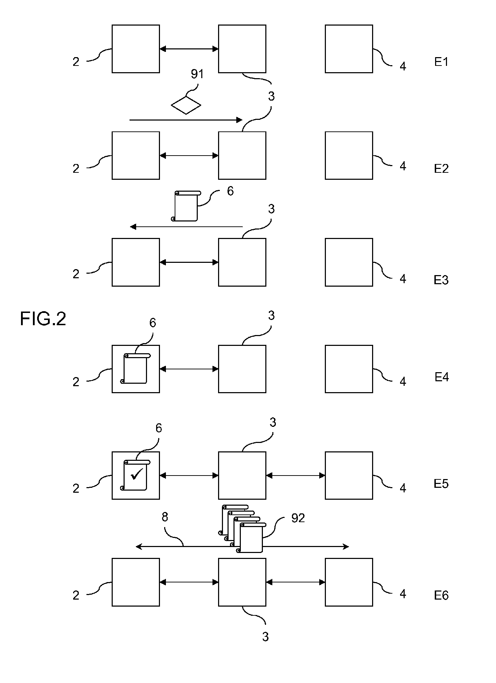

The service platform **3** is adapted for establishing a real-time voice and/or video communication **8,** such as (but not limited to) a VolP communication, through the communication network between the end-user terminal **2** and the remote server or terminal **4,** upon a specific action on the end-user terminal **2.** This specific action will be described further in detail later in the description with connection to a method for interactive communications, with reference to figure 2. In brief, in this method for interactive communications, a first digital content **61 -** such as a video sequence - with at least one interactive selectable area **62,** forming an interactive digital content **6,** is received by the end-user terminal **2.** Upon selection of a determined interactive area **62,** the service platform **3** establishes a real-time voice and/or video communication **8** between the end-user terminal **2** and the remote server or terminal **4** for providing a determined service.

The end-user terminal **2** can be a telephone, a mobile telephone, a smart phone, a computer, a PDA-communicant, a television set, a screen or any device that can be connected to a network.

The end-user terminal **2** comprises at least one human-to-machine interface, which can be one or more of the following: a keypad, a keyboard, a mouse, a graphic tablet, a joystick, a gamepad, a remote control, a microphone, a touch screen or any other human-to-machine interface.

The human-to-machine interface enables a person, which is party to the interactive communication, to act directly or indirectly on the end-user terminal **2.**

The service platform **3** comprises a network/telecommunication gateway **31** for providing an interface between a network (on the end-user terminal side) and real-time and non real-time multimedia telecommunications (on the remote server or terminal side).

In one particular embodiment of the invention, the end-user terminal **2** uses a widespread virtual machine - such as Adobe Flash^{®} - launched on a network browser for connection to the service platform **3,** and the remote server or terminal **4** uses a widespread protocol that enables real-time voice and/or video communications **8 -** such as SIP. The Adobe Flash^{®} comprises then a plug-in that emulates a telephone. In this particular embodiment, the network/telecommunication gateway **31** is a Flash/SIP gateway.

An advantage of using such widespread virtual machine and protocol is that the great majority of users (on end-user terminal side) and service provider (on remote server or terminal side) do not need to install a specific program on their terminals **2** and **4.**

The service platform **3** may further comprise a presence control unit **32** for registering end-user terminals **2** connected to the service platform **3.** With such a presence control unit **32,** it is possible for the system to trace back the communication path from the end-user terminal **2** to the service platform **3** and then to the remote server or terminal **4,** but also from the remote server or terminal **4** through the service platform **3** to the end-user terminal **2.**

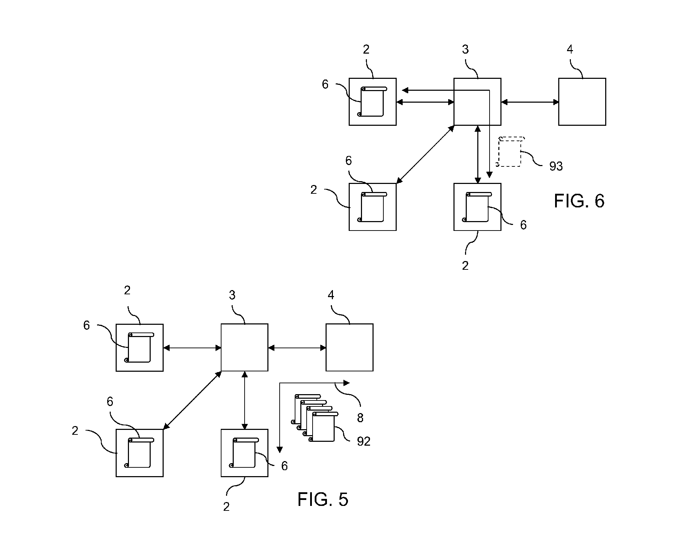

The presence control unit **32** can also enable identification of end-user terminal **2** by giving them a temporary identification code, which is kept until the end-user terminal **2** disconnects from the service platform **3.** Thus, in case there are several end-user terminals **2** connected to the service platform **3,** communication between these end-user terminals **2** is possible. In this configuration, the presence control unit **32** enables these end-user terminals **2** to exchange second digital contents **93,** providing one-to-one connection (such as personal messaging) (see figure 6).

Further to one-to-one connection, the presence control unit **32** also enables many-to-many connection (between several end-user terminals **2** and eventually with the remote server or terminal **4,** for example for a conference) with exchange of second digital contents **93** and eventually voice and/or visual data **92.** An end-user terminal **2,** which was not part of the many-to-many connection, can connect to the many-to-many connection at any time. This end-user terminal **2** will then receive second digital contents **93** and eventually voice and/or visual data **92** not yet sent prior to its connection.

Moreover, one-to-many connection can be settled. In one-to-many connection, the remote server or terminal **4** sends to several end-user terminals **2** voice and/or visual data **92** at the same time. Voice and/or visual data **92** are opened substantially at the same time by end-user terminals **2.** The remote server or terminal **4** controls the opening of voice and/or visual data **92** on the end-user terminals **2.** An end-user terminal **2,** which was not part of the one-to-many connection, can connect to the one-to-many connection at any time. This end-user terminal **2** will then receive voice and/or visual data **92** not yet sent prior to its connection.

The service platform **3** comprises tools that provide the high interactivity and the various possibilities offered by the method described hereafter.

The service platform **3** can comprise access tools **38** such as PSTN gateway, 3G gateway, firewall traversal equipments (for bypassing firewalls).

The service platform **3** can also comprise resource tools **34** such as high definition multipoint control units, cross-network and terminal agnostic video streaming units, audio/video transcoders and real-time video Quality of Service monitoring.

The service platform **3** can also comprise connector tools **35** enabling voice and/or video communication **8** towards and voice and/or visual data exchange with digital media such as social networks, 3D virtual worlds and telecommunication operator's network equipments (Short Message Service Centre, Multimedia Message Service Centre).

The service platform **3** can also comprise a general database **36** for storing personal user information and customer-specific application settings (the customer being on the remote server or terminal side), archiving end-user terminal session history in Call Detail Records files, storing detailed information related to the end-user terminal connection.

The service platform **3** can also comprise a general storage unit **37** for storing digital contents.

The service platform **3** can further comprise a media server **33.** The media server **33** is connected to the resource tools **34,** the connector tools **35,** the general database **36** and the general storage unit **37,** when applicable.

The media server **33** can connect to access tools **38** and equipments such as PSTN gateway, 3G gateway (for connection with 3G mobile video phone terminals) and firewall traversal (for bypassing firewalls). A Flash/SIP gateway, if any, can also be connected to the media server **33.**

The media server **33** can comprise an edition unit **331** for editing (modifying, deleting or creating) the interactive digital content **6** to be received by the end-user terminal **2.**

Edition of the interactive digital content **6** can be set as allowed at any time or only before its first broadcasting by the remote server or terminal **4** or by the service platform **3.**

The media server **33** also comprises an application storage **332** connected to the edition unit **331.** The application storage **332** comprises various applications **3321,** which can be allocated to the interactive selectable area(s) **62.** The applications **3321** can be predefined in the application storage **332** such as television service (voting tool for real TV shows for example), video conferencing, contact centres, multimodal portal, video recording, live event, live cross-media broadcasting etc. These applications **3321** can be any application using the real-time voice and/or video communication **8,** any application running in the end-user terminal **2** and independently from the real-time voice and/or video communication **8** once uploaded into the end-user terminal **2,** or any application enabling communication to web applications and/or services without using the real-time voice and/or video communication **8.**

One application can be a voice/visual parting application enabling parting of voice and video data.

In a particular embodiment of the invention, the application storage **332** is accessible to application developers. Application developers can therefore upload applications **3321** to the application storage **332** to enrich the application storage **332** with new applications **3321** therefore ensuring evolution of the application supply.

The remote server or terminal **4** may also comprise one or more of a telephone, a mobile telephone, a smart phone, a computer, a PDA-communicant, a television set a screen or any device that can be connected to a network.

When a voice/visual parting application is used, voice data are directed to a voice apparatus **43** (telephone, mobile telephone, smart phone, computer, television set, etc.) and visual data are directed to a display apparatus **42** (LCD screen, screen, computer, television set, PDA-communicant, etc.).

The remote server or terminal **4** can be part of a call centre or contact centre.

### The method for interactive communications

In reference to figure 2, a method for interactive communications according to one exemplary implementation of the invention is described hereafter. This method is implemented using the system **1** described above (see figure 1).

The method provides interactive communications between the end-user terminal **2** and the remote server or terminal **4.**

The method comprises the following steps.

In step **E1,** the end-user terminal **2** connects to the service platform **3** through the communication network.

Optionally, in step **E2,** upon connection, the end-user terminal **2** sends a presence message **91** to the presence control unit **32** of the service platform **3**. The presence control unit **32** registers the end-user terminal **2.** The registration enables receiving second digital content **93** by the end-user terminal **2** by providing back tracing of communication path.

Session history information about the end-user terminal connection can be temporary stored in the presence control unit **32** and then saved in Call Detail Records files, which are transferred to the general database **36** when the end-user terminal **2** disconnects from the service platform **3.**

In step **E3,** the service platform **3** transmits the interactive digital content **6** to the end-user terminal **2** through the communication network. The transmission is, for example, triggered by the end-user upon access to an url address from which the interactive digital content is downloaded.

In step **E4,** the end-user terminal **2** opens the interactive digital content **6** to have access to the first digital content **61.** Eventually, the first digital content **61** is accessible through a content reader **63** comprised in the interactive digital content **6.** For instance, if the first digital content **61** is a video sequence, it is displayed in a video window. Consequently, at least an interactive area **62** selectable by the end user through action on human-to-machine interface of the end-user terminal **2** is displayed after the first digital content **61** is accessed.

In step **E5,** the end user selects a determined interactive area **62** upon which the service platform **3** establishes a real-time voice and/or video communication **8** through the communication network, between the end-user terminal **2** and the remote server or terminal **4.**

In step **E6,** once the real-time voice and/or video communication **8** is established, the remote server or terminal **4** exchanges with the end-user terminal **2** interactive voice and/or visual data **92** through the real-time voice and/or video communications **8.** Voice and/or visual data **92** sent during the real-time voice and/or video communication **8** can be dissociated at the service platform input and resynchronised at its output. Thus, voice data and visual data can carry different information and trigger different applications or services.

Voice and/or visual data **92** can be sent directly from the remote server or terminal **4** to the end-user terminal **2** via the service platform **3** or can be stored in the general storage unit **37** of the service platform **3.**

Voice and/or visual data **92** stored in the general storage unit **37** can be modified, deleted or added at any time by the remote server or terminal **4.**

Visual data can be displayed on the end-user terminal **2** on an information window. The information window can appear either as a distinct window or as a transformation of the video window if the first digital content **61** is a video sequence.

Visual data can be pictures, videos, interactive areas or any visual information.

In case there are at least one interactive area among the visual data and displayed on the information window, further voice and/or visual data **92** can also be sent in real-time for giving information about the interactive area(s).

In case there are several end-user terminals **2** connected to the service platform **3** and on which the interactive digital content **6** is opened (see figure 5 and 6), the end-user terminal **2** can be targeted by the service platform **3** to distribute the correct voice and/or visual data **92** to the correct end-user terminal **2** (see figure 5). Also in this case, a second digital content **93** can be sent by the service platform **3** to the end-user terminal **2.** The second digital content **93** comes from another end-user terminal **2** (see figure 6).

Interactive digital content **6** can be modified, deleted or created by the remote service or terminal **4** at any time through the edition unit **331** of the media server **33** of the service platform **33.** Modification of the interactive digital content **6** implies modification of the first digital content **61** and/or interactive area(s) **62** (location in space and time, and application allocated to it/them).

### The method for easily creating and editing an interactive digital content

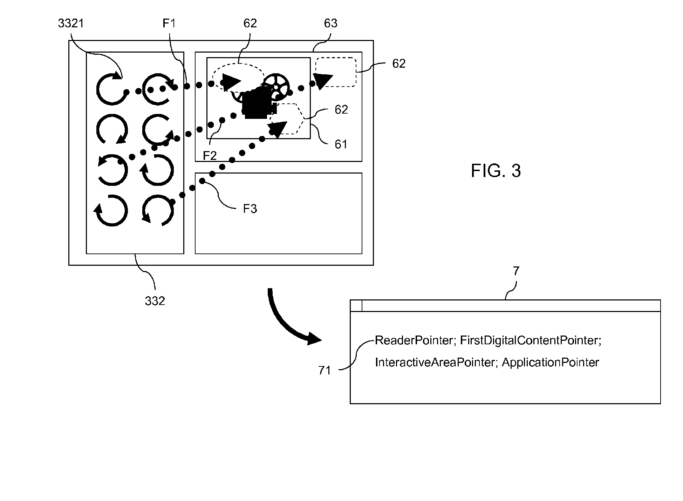

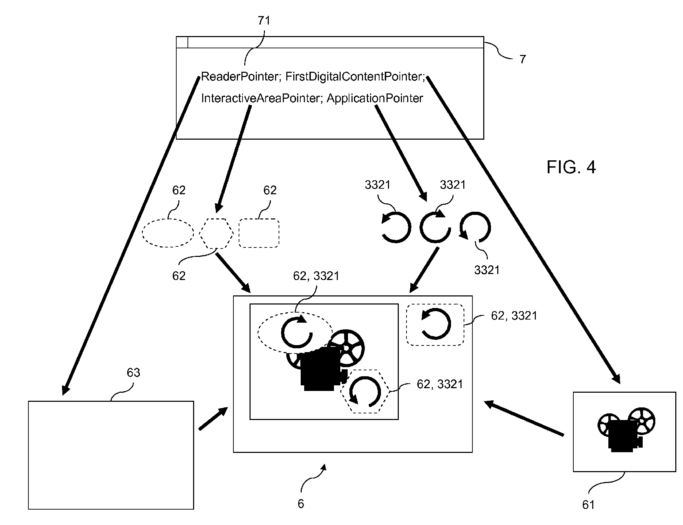

With reference to figures 3 and 4, a method for easily creating an interactive digital content **6** with a first digital content **61,** at least an interactive area **62** and eventually a content reader **63** is hereafter described.

The interactive digital content **6** is created through the edition unit **331.**

The first digital content **61** and/or content reader **63** can be created by a third party, the party on the remote server or terminal side or predefined and stored in the general storage unit **37** as a template.

The interactive area(s) **62** is/are defined via parameter data given information about where, when and for how long it/they appear(s). The interactive area(s) **62** for predefined first digital content **61** stored in the general storage **37** can be predetermined and be part of the template which is easily editable by a non-specialist.

The interactive area(s) **62** can also be defined as a moving object when it is displayed as following another moving object such as a moving video window.

Interactive area(s) **62** can have different size and shape. Size and shape can also vary with time.

In this method, one or more applications **3321** is/are allocated to at least an interactive area **62.** The application(s) **3321** is/are selected among a list of applications stored in the application storage **332** of the media server **33** of the service platform **3.** One application allocation is succeeded with one digital pointer **71.**

The result of this interactive digital content creation is not the interactive digital content **6** *per se,* but a digital file **7** comprising lines of code with information and pointers **71** corresponding to the information needed to create the interactive digital content **6.**

Information comprised in the digital file **7** can be one or more of: an interactive digital content identification (for identifying the interactive digital content among other interactive digital contents); a user identification (for identifying the end user); interactive area identification (specific to a determined interactive digital content for identifying interactive area thereof); application identification, etc.

At least some identification pieces of information are the pointers.

User identifications also enable parting of different groups of end users. For example, to know whether the end user belongs to a particular group with privileges or to know to which social class the end user belongs so that offered services are customised consequently.

Only one interactive digital content structure is then necessary. The interactive digital content structure, the first digital content **61,** eventually the content reader **63,** the interactive area(s) **62** and the application(s) **3321** allocated to the interactive area(s) **62** are then assembled to form the interactive digital content **6** when its opening is requested.

The assembling can be carried out whether prior to transmitting the interactive digital content **6** to the end-user terminal **2** or after transmitting the first digital content structure, the first digital content **61,** the interactive area(s) **62,** eventually the content reader **63** and the application(s) **3321** allocated to the interactive area(s) **62** to the end-user terminal **2** by the service platform **3.**

An exemplary way to carry out the allocation is to use a "drag and drop" method, when the end-user terminal **2** has a screen (any kind of screen) connected to a human-to-machine interface that enables sliding **(F1, F2** and **F3** of figure 3) a determined icon representing said determined application **3321** and displayed on the screen. The human-to-machine interface used for sliding can be any of a mouse, a joystick, a gamepad, a touch screen, a graphic tablet, etc. The icon is dragged to the determined interactive area **62** and dropped there. The "drag and drop" method is well-known and is not further described in detail.

Edition of the interactive digital content **6** can be made available at any time forming an updated interactive digital content **6.** In this case, interactive digital content **6** are editable by the remote server or terminal **4** through the edition unit **331.** End users that have opened the interactive digital content **6,**can be informed about the interactive digital content **6** being updated, for example by a written message or voice message (voice and/or visual data **92**). If end-user terminals **2** disconnect and reconnect to the service platform **3,** they will then receive the updated interactive digital content **6.**

The written message or voice message **92** can carry various pieces of information other than the one stating that the interactive digital content **6** has been updated. For example, such message can carry information about product shortage, new available product or services, product or service outdating, etc.

### The media support

The method for interactive communications described here above can be implemented by a computer program.

The computer program can be stored in a media support readable by the system **1** for interactive communications described here above.

The media support can be a CD-ROM, a DVD, a server, a memory stick, an SD-card and alike or any support that enables storage of a computer program.

### Examples of applications

### First example - airline company call centre

### A first example of use is given here after.

In this example, an airline company would like to promote a special offer with respect to flight ticket sales. They design an interactive digital content **6** with a first digital content **61** which is a video sequence. They also define display of interactive areas **62** with parameter data (when, for how long and where they appear) and application allocation through the edition unit **331** of the service platform **3** or through a third party that uses the edition unit **331** of the service platform **3.**

The airline company then receives a digital file **7** with lines of code. The airline company can then broadcast the video sequence **61** by either copying and pasting the lines of code into the script encoding a web page or uploading the digital file to a social networking website such as Facebook™, Twitter™, YouTube™ or Second Life™, etc. The flight company can also send the digital file **7** directly to potential customers which are then end users.

If reading of the video sequence **61** is requested by an end-user terminal **2,** the lines of code enables the end-user terminal **2** to connect to the service platform **3.**

The first digital content structure, the video sequence **61,** the interactive area(s) **62,** the content reader **63,** and the application(s) **3321** allocated to the interactive area(s) **62** are then assembled to form the interactive digital content **6.**

The end-user terminal **2** displays the video sequence **61** via the content reader **63** when transmission is completed or even during transmission (in this latter, for example by streaming). The video sequence **61** is viewed in a video window provided by the content reader **63.**

At least an interactive area **62** appears as the video sequence **4** is played. The end user can decide to select one of the interactive areas **62.** The selection of a determined interactive area **62** causes establishing of a real-time voice and/or video communication **8** between the end-user terminal **2** and the remote server or terminal **4,** which can be in a call centre of the airline company. This real-time voice and/or video communication **6** is established by the service platform **3.**

The end user can then talk to a steward/-ess of the airline company so that he can, for example, book a flight directly with human-to-machine interface of the end-user terminal **2** such as microphone with or without webcamera or a regular telephone, or mobile phone, etc.

During the real-time voice and/or video communication **8** established between the remote server or terminal **4** and the end-user terminal **2,** the steward/-ess might wish to display or open on the end-user terminal **2** interactive voice and/or visual data **92** which might appear as a window showing information or voice information on available flights.

To this aim, the remote server or terminal **4** can display a selection window. Any visual information put into the selection window is transmitted to the end-user terminal **2** such that the selection window acts as a video camera.

On the end-user terminal **2,** an information window appears either as a distinct window or as a transformation of the video window. The information window displays information and selectable areas which have been put into the selection window on the remote server or terminal side.

The end user can thus see the information on the information window and the steward/-ess does not need to enumerate all the possible flights and corresponding information.

The end user can indicate his/her choice by speaking through the real-time voice and/or video communication **8** or by selecting on the information window the corresponding selectable area. In this latter, the end-user terminal **2** sends a choice message to the remote server or terminal **3** containing information on the flight chosen by the end user through the end-user terminal **2.**

Therefore, the flight company steward/-ess can provide the end user with further information on the object of his/her interest. Use of both real-time voice and/or video communication **8** and display of information and/or selectable areas on the end-user terminal **2** might ease comprehension and decision.

Indeed, on one hand, in a voice-only communication, when too much information is given, the end user might have difficulties with recalling all the information and thus, with coming up with a decision. On the other hand, displayed-only communication with information displayed on the end-user terminal **2** can puzzle the end user since some needed information might be difficult to find quickly. Also, the end user might want to ask for further information that is not displayed and might be frustrated if there is no mean for him to contact rapidly the service provider (here the airline company).

If the end user or the steward/-ess wishes to bring the communication to an end, either can select an end/finish switch on the end-user terminal **2** or the remote server or terminal **4** or if a telephone is used by simply hanging the telephone or switching it off.

### Second example - travel agency, pre-stored information

In this second example, a travel agency sells cruises vacation. In general, the travel agency is smaller than the airline company of the first example and therefore might not be able to have a call centre.

People working in this travel agency might not be trained to handle with the selection window as described in the former example. Or the travel agency might not be able to provide a computer dedicated to such a service as the ones enabled by the invention. Therefore, the travel agency will only handle this service through a (mobile) telephone (remote server or terminal **4).**

The creation of the interactive digital content **6** and its broadcasting is not modified.

When the end user selects the determined interactive area **62,** the service platform **3** establishes a real-time voice and/or video communication **8** between his end-user terminal **2** and the telephone **4** of the travel agency.

The end user can now ask for information. To display information on the end-user terminal **2,** the travel agent online with the end user will just need to dial a combination of digits and/or symbols available on a telephone keypad.

Each combination corresponds to one piece of information **92** to be displayed on the end-user terminal **2.** The piece of information **92** can also be voice information and will therefore not be necessarily displayed.

This is possible because about 80 % of information asked by customers are the same and answers can thus be stored in the general storage unit **37** as voice and/or visual data **92.** These questions are like website frequently asked questions.

For example, the end user is interested in knowing how the ferry used for the cruise looks like. Then the travel agent will press #1. If the end user is interested in knowing the exact cruise stages, the travel agent will press #7, and so on.

Information stored in the general storage unit **37** as voice and/or visual data **92** can be modified, deleted and added at any time by the travel agency.

While the information is provided to the end-user terminal **2,** the travel agent and the end user can still be on real-time voice and/or video communication **8** one with the other.

Features of first example can be endowed to second example. Features of second example can be endowed to first example. Any features of both examples can be endowed to any other applications. Features of both examples are not limitative.

## Claims

1. A method for interactive communication between a remote server or terminal (4) and an end-user terminal (2),
wherein a given interactive digital content (6) is downloaded on said end-user terminal through a communication network,
said interactive digital content (6) being such that at least an interactive area (62), which is selectable by the end user through action on interface means of the end-user terminal (2), is displayed on said end-user terminal (2) when said end-user terminal runs said interactive digital content (6) ;
and wherein a real-time voice and/or video communication (8) between the end-user terminal (2) and said remote server or terminal (4) is automatically established (E5) via the communication network through which the interactive digital content (6) has been downloaded, upon selection of a determined interactive area (62) by the end user.

2. A method according to claim 1, wherein the end-user terminal (2) is connected to a service platform (3) through the communication network, said service platform transmitting (E3) to said end-user terminal (2) the interactive digital content (6) through said communication network and establishing (E5) the real-time voice and/or video communication (8) between the end-user terminal (2) and said remote server or terminal (4).

3. The method according to claim 1 or 2, wherein said interactive digital content (6) comprises a video sequence (61).

4. The method according to any claims 1 to 3, wherein the communication network is a TCP/IP network, the real-time voice and/or video communication (8) between the end-user terminal (2) and said remote server or terminal (4) being a telephony over IP communication.

5. The method according to any claims 1 to 4, wherein, after selection of said determined interactive area (62), said remote server or terminal (4) exchanges with the end-user terminal (2) interactive voice and/or visual data (92), through said real-time voice and/or video communication (8).

6. The method according to any claims 1 to 5, comprising transmitting a second digital content (93) by said service platform (3) to said end-user terminal (2).

7. The method according to claim 6, wherein said end-user terminal (2) is targeted within a population of end-user terminals, on which said interactive digital content (6) is run, and which are connected to said service platform (3).

8. The method according to any claims 1 to 7, comprising sending a presence message (91) by said end-user terminal (2) to a presence control unit (32) of the service platform (3) for registering said end-user terminal (2) on said presence control unit (32) enabling incoming real-time voice and/or video communication (8); and eventually enabling receiving the second digital content (93) by said end-user terminal (2).

9. The method according to any claims 1 to 8, wherein said interactive digital content (6) is modifiable by the remote service or terminal (4) through the service platform (3) at any time.

10. A method for generating an interactive digital content (6) to be used in a method for interactive communication according to the preceding claims, wherein, at least an interactive area (62) being associated to a digital content (62), one or more computer application(s) (3321) is/are allocated to said interactive areas (62) through a digital pointer (71), the application(s) (3321) being selected among a list of applications and being stored in an application storage (332) of a service platform (3).

11. The method according to claim 10, wherein a determined application (3321) is allocated to a determined interactive area (62) by dragging a determined icon representing said determined application (3321) from a list of icons representing the applications to said determined interactive area (62).

12. System for interactive communications between an end-user terminal (2) and a remote server or terminal (4), comprising:
- an end-user terminal (2);
- a service platform (3); and
- a remote server or terminal (4);
said end-user terminal (2) and said remote server or terminal (4) being connectable to said service platform (3);
said end-user terminal (2) being adapted for opening an interactive digital content (6) received from said service platform (3) through communication network, and for displaying an interactive area (62) contained within said interactive digital content (6);
said service platform (2) being adapted for establishing a real-time voice and/or video communication (8) through the communication network between said end-user terminal (2) and said remote server or teminal (4) upon selection of a determined interactive area (62).

13. The system according to claim 12, wherein the service platform (3) comprises a network/telecommunication gateway (31) for enabling interactive voice and/or visual data (92) exchange between said remote server or terminal (4) and said end-user terminal (2).

14. The system according to claim 13, wherein said service platform (3) comprises a presence control unit (32) adapted to register said end-user terminal (2).

15. The system according to claim 14, further comprises another end-user terminal wherein said presence control unit (32) is further adapted to enable transmission of a second digital content (93) between said end-user terminal (2) and said another end-user terminal.

16. The system according to any claims 10 to 15, wherein the service platform (3) comprises an edition unit (331) accessible by the remote service or terminal (4) at any time for modifying, deleting or creating said interactive digital content (6).

17. Computer program comprising code instructions for the execution of steps of the method according to claims 1 to 11, when said program is run on a computer.

18. Computer program product comprising code instructions memorized on a computer readable support programming means to perform steps of the method according to claims 1 to 11, when run on a computer.
